# EUROPEAN PATENT SPECIFICATION

(11) **EP 3 524 952 B1**
(45) Date of publication and mention of the grant of the patent: **22.06.2022**
(21) Application number: 19156392.3
(22) Date of filing: 11.02.2019
(51) Int. Cl.: G01L 5/102

(54) **MEASURING DEVICE**
MESSEINRICHTUNG
ENSEMBLE DE MESURE

(30) Priority: 13.02.2018 IT 201800002651
(43) Date of publication of application: 14.08.2019
(73) Proprietor: Datainabox S.r.l., 25125 Brescia (IT)
(72) Inventor: Facconi, Massimo, 25125 Brescia (IT); Milan, Emiliano, 25125 Brescia (IT); Salgarelli, Luca, 25125 Brescia (IT)
(74) Representative: Perani & Partners S.p.A.

(56) References cited:
- WO-A1-2013/124767
- US-A1- 2009 121 587

## Description

### Field of the invention

The invention relates to the field of measurements of quantities relating to machines for industrial production. In particular, the invention relates to a compact, portable, inexpensive measuring device, which can be adapted to different types of machines.

### Description of the state of the art

The evolution of communication, storage, processing and control systems, with the possibility of managing ever-increasing volumes of data, has been leading in recent years to a revolution in information, logistics and industrial production called industry 4.0.

In this context, the data acquisition allows monitoring the operation of the machines much more than in the past. This plays a key role in increasing the automation of individual machines and systems requiring an interaction between different machines as well as in increasing the safety of a work environment requiring the simultaneous presence of man and machine.

Moreover, an analysis of production data collected for long periods allows evaluating the performance of individual machines to judge their efficiency as well as to predict any malfunction and carry out preventive maintenance operations. It is therefore possible to identify the most appropriate interventions to be implemented in order to optimize a production process in all its phases, thus smartly obtaining a quality product by reducing production costs, production times and labour required.

EP 2806255 describes a device for measuring the forces applied in a brake bench. The device is designed to be interposed between a brake pedal of a vehicle and a body pressing the pedal, e.g. a foot. The device is then subjected to the same force acting on the pedal, which deforms an arched plate of the device. The deformation is measured by means of extensometers and communicated externally in wireless mode thanks to the presence of a battery. The electronics can be kept off to save energy, and then turned on when a capacitive button detects the application of a force.

US 201577085 describes a device for measuring tensile forces of a rope or other similar bodies. The device provides for the passage of the rope in a deflecting structure. Within this structure, the tensile force that tends to avoid the deflection of the rope is counteracted by a spring. The device therefore recognizes a correspondence between the deformation of the spring and the deflecting force, thus obtaining a measure of the force that is then externally communicated in wireless mode.

US 3988931 describes an apparatus for measuring forces associated with the movement of a ski boot in various directions. In particular, vertical forces are transmitted through a lever to a bellows, and then hydraulically to traditional indicators. WO 2013124767 describes a wireless self-powered switch device with an internal mechanism for providing two opposite stable positions, such that the change of the final output between the two end positions is clear-cut, and the energy for changing position is always enough to activate the circuitry.

### Problem of the prior art

The design and construction of production plants with the related measurement, communication and control tools are now often tailored on the product to be obtained. On the other hand, adapting a machine to a different task than the one for which the machine had been originally designed, or modernizing an existing machine to introduce it into a new production chain creates greater difficulties. The applicant has in fact observed that even perfectly operating machines are often not designed to accommodate sensors in the desired positions, and therefore their use in an automated or otherwise modified environment compared to a previous work context is difficult and expensive.

Therefore there is a need for sensors designed to adapt to the problems of different types of machines, which can be applied to a machine in positions where the presence of a sensor had not been initially envisaged, and which can collect useful data without hindering the machine operation.

### Summary of the invention

The object of the present invention is to provide a small-sized measuring device that is designed to acquire operating data of different natures from various types of machines without hindering their operation.

A further object of the invention is to provide a simple, robust and inexpensive measuring device.

These and other objects are achieved by a measuring device according to any one of the appended claims. The measuring device according to the invention comprises:
- an acquisition unit comprising:
- a transducer having a measuring portion, the transducer being configured to harvest and convert the energy associated with a force applied to the measuring portion, and to convert it into an electrical signal supplied to the acquisition unit, and
- a sending unit connected to the transducer, the sending unit being configured to receive and process said electrical signal and to transmit a wireless signal containing information representative of the force applied to the measuring portion of the transducer,
- a mechanical interface associated with the acquisition unit and having a detection portion, the mechanical interface being switchable from an inactive configuration to an active configuration for the application of a mechanical action on the detection portion, the mechanical interface being configured to apply a force, in the active configuration, to the measuring portion of the transducer.

Advantageously, the device requires a small number of components, easily obtainable in a small size, so that it can be made at low cost and can be arranged in positions of the machine that are inaccessible to other measuring devices.

In particular, the data acquired by the device can be sent to an external unit receiving, storing and analysing the collected information. On the other hand, it is not necessary for the measuring device to include an analysis unit or a memory. Furthermore, a plurality of measuring devices associated with different data of the same machine or with separate machines can all be in communication with a single analysis unit. Advantageously, the communication of the acquired data is obtained without the use of wires, which can hinder the movements of the machine and which in any case represent a risk factor to be evaluated in relation to the safety of the work environment.

Advantageously, the device can be adapted to machines of different nature by making relatively small changes to the position or to the conformation of the mechanical interface.

In an embodiment, the mechanical interface comprises:
- an application member connected to the acquisition unit and movable with respect to the acquisition unit, said detection portion being associated with the application member, and
- a transmission member associated with the measuring portion of the transducer, the transmission member being configured to counteract the passage of the application member from a first position in the inactive configuration to a second position in the active configuration, and to transmit to the measuring portion of the transducer a force applied to the detection portion of the application member in the active configuration.

In particular, the application member is hinged to the acquisition unit and is configured to transfer to the transmission member a force applied to the detection portion acting as a lever.

Furthermore, the transmission member comprises a first cylinder-piston system arranged between the application member and the measuring portion of the transducer, the first cylinder-piston system being configured to perform a compression stroke upon the passage of the application member from the first position to the second position.

Advantageously, the transmission member with the cylinder-piston system allows acquiring data relating to a mechanical action that involves a significant displacement of the point of application, and therefore a movement of the application member, without the transducer being subjected to excessive deformations. The lever-shaped application member further increases the adaptability of the device to similar mechanical actions.

This allows the use of the device to measure the working forces of machines that perform repetitive motions with impulsive forces. For example, such a device can be arranged near the stroke end point of a movable part of the machine, which will act on the lever meeting a mechanical resistance which is limited thanks to the presence of the cylinder-piston system, and which is modulated by the lever.

In a similar condition of use, the known device disclosed in EP 2806255 would instead have only limited possibilities of deformation, being free of movable parts before the sensor head, and would oppose a high resistance to the motion of the machines. The possible consequences, depending on the intensity of the force to be measured, are for example a break in the device or an interruption of the machine work.

Optionally, the measuring device comprises a connection system comprising first and second connection members. The connection system can be switched between a first connection configuration and a second connection configuration. In the first connection configuration, the application member is hinged to the acquisition unit at the first connection members and is configured to act on the transmission member according to a first leverage ratio, whereas in the second connection configuration the application member is hinged to the acquisition unit at the second connection members and is configured to act on the transmission member according to a second leverage ratio different from the first leverage ratio.

Advantageously, therefore, it is sufficient to reconfigure the connection system by repositioning the application member to allow the adaptation of different entity forces to the same transducer.

Alternatively, the application member can be shaped like a second cylinder-piston system adapted to be activated thanks to the pressure of an external fluid, instead of being lever-shaped.

In the preferred embodiment, the acquisition unit is configured to be electrically powered by converting the force applied to the measuring portion into the electrical signal by means of the transducer.

Advantageously, therefore, no external power supply is required for the device, and in particular, the use of dedicated wires is not necessary. Moreover, the device is particularly reliable in that it does not require batteries or similar storage systems, and consequently it is not necessary to provide for its periodical replacement, nor is there a risk that data acquisition will be interrupted due to a lack of energy.

Optionally, the acquisition unit includes a rigid housing, the transducer and the sending unit being housed in the housing, the application member being attached to the acquisition unit at the housing.

Optionally, the device comprises at least one conversion member configured to convert a respective physical quantity to be measured into a mechanical action applied to the detection portion of the mechanical interface.

The at least one conversion member can comprise for example a third cylinder-piston system designed to face a fluid duct and configured to press on the detection portion of the mechanical interface upon the passage of a fluid in the duct, in particular in the case of a lever-shaped application member.

An alternative conversion member may comprise a first wire secured to the lever-shaped application member and slidable with respect to the casing.

The at least one conversion member may further comprise a coupling member attached to a support body, to which the casing is fastened, remaining movable with respect to the support body, and a second wire connected to the coupling member. The coupling member is configured to bring the mechanical interface into the active configuration by applying a mechanical tension to the second wire.

The device can be provided in a kit containing various application members and/or different conversion members.

Advantageously, even if the acquisition device and the application member were too invasive for the introduction into a specific position of a machine, or the nature of the datum to be measured were not suitable to develop a mechanical action directly on the application member, the conversion elements allow modifying the nature of the datum to be measured or moving the point of application of a mechanical action, further reducing the encumbrance of the device in the part of the machine where the data must be acquired.

### Brief description of the drawings

The characteristics and advantages of the present invention will become apparent from the following detailed description of a possible practical embodiment, shown by way of a non-limiting example in the enclosed drawings, in which:
- Figure 1 shows a side view of a measuring device according to a first embodiment of the present invention,
- Figure 2 shows an exploded perspective view of the device of Figure 1,
- Figure 3 shows a side view of a measuring device according to a second embodiment of the present invention, and
- Figure 4 shows a perspective view of the measuring device of Figure 3,
- Figure 5 shows a schematic side view of a measuring device according to a third embodiment of the invention,
- Figures 6, 7 and 8 show distinct parts of the device of Figure 5, and
- Figure 9 shows an exploded view of a measuring device according to a fourth embodiment of the invention.

### Detailed description

The figures show a measuring device according to the invention, generally designated by the reference number 1. The device 1 comprises an acquisition unit 2 which, as will be described more in detail below, is configured to generate a wireless signal representative or in any case indicative of a force appropriately applied to the acquisition unit 2, for example indicating the exceeding of a minimum force threshold, or alternatively, being proportional to the value of the force.

In particular, the acquisition unit 2 comprises a transducer 21, which has a measuring portion 21a adapted to receive a force to be measured, such as a surface of the transducer 21 on which the force must be applied. The transducer 21 is sensitive to forces included in a range of values ranging from a minimum value of detectable force, corresponding to the minimum force threshold, to a maximum safety value of force. The transducer 21 further comprises a plurality of electrical terminals, for example two electrical terminals (not shown in the figures).

The transducer 21 is configured to convert the force applied to the measuring portion 21a into an electrical signal, preferably consisting of a voltage signal between the electrical terminals of the transducer 21. More in detail, the transducer 21 is configured to harvest energy associated with the force applied to the measuring portion 21a, and to convert this energy into the electrical signal, which is adapted to electrically supply the acquisition unit 2.

The transducer 21 can be for example a transducer of the piezoelectric type. As already known, in fact, the application of a force to a piezoelectric material along to an appropriate direction causes a deformation of the material, generally in the order of nanometres, and gives rise to a difference in the electrical potential between two opposite faces of the material, which can each be connected to a respective electric terminal to make a transducer.

Alternatively, the transducer 21 comprises a magnetic element (not shown), such as a permanent magnet, and a circuit portion magnetically coupled to the magnetic element. The magnetic element is movable to induce the electrical signal in this circuit portion. The electrical terminals of the transducer are connected to the circuit portion.

According to this example, the transducer 21 further comprises a mounting element (not shown) that supports the magnetic element. The mounting element is snap-movable in a first direction when the force applied to the measuring portion 21a exceeds the minimum force threshold, and in a second direction opposite the first when the force falls below the minimum force threshold. The magnetic element is movable together with the mounting element.

The signal is then generated following both snap movements. It is possible to distinguish the snap movements in the first and in the second direction since the signal is generated with two respective opposite signs.

The generated electrical signal is representative or in any case indicative of the force applied to the measuring portion 21a. In the preferred embodiments, in fact, the signal indicates the exceeding of the minimum force threshold, as it occurs for piezoelectric transducers or in the presence of the magnetic element. On the other hand, in other embodiments of the transducer 21 not shown, with forces having values within a predetermined range of values, the electrical signal can be substantially proportional to the force applied to the measuring portion 21a.

In these embodiments, no external electrical supply is required for the transducer 21, which generates the electrical signal starting from a conversion of the mechanical energy associated with the force applied to the measuring portion 21a, which corresponds to the energy associated with the deformation/snap movement relative to the transducer 21.

The acquisition unit 2 further comprises a sending unit 22, electrically connected to the transducer 21, and in particular to the electrical terminals of the transducer 21. The sending unit 22 is configured to receive and process the electrical signal generated by the transducer 21. Based on this processing, the sending unit 22 is then configured to generate and transmit a wireless signal containing a measurement information representative or indicative of the electrical signal received. Therefore, ultimately, the measurement information of the wireless signal is representative of the force applied to the measuring portion 21a of the transducer 21, based on whether the minimum force threshold is exceeded or according to a proportionality ratio. The wireless signal can be either an analog or a digital signal.

In detail, the sending unit 22 comprises an electronic processing unit 22a, configured to process the electrical signal of the transducer 21 originating a processed signal, and an antenna 22b, configured to generate the wireless signal by transmitting the signal processed by the electronic processing unit 22a.

In the preferred embodiment, the sending unit 22 is configured to be electrically powered exclusively by means of the electrical signal generated by the transducer 21. The electrical signal is therefore used by the sending unit 22 both as an electrical supply and as a reference signal for the measurement information transmitted via the wireless signal.

In this embodiment, therefore, the whole acquisition unit 2 is configured to be electrically powered exclusively through the conversion of the energy associated with the force applied to the measuring portion into an electrical signal by means of the transducer 21. Therefore, the acquisition unit 2 can be considered as a passive element, which is activated upon the application of a force to the measuring portion 21a and is deactivated when this force is nullified. Preferably, therefore, there are neither batteries or other energy storage systems connected to the acquisition unit 2 nor wires for the connection to an external electric power source.

Generally, the conversion of a force into an electrical signal by means of a transducer 21 makes only small amounts of energy available, and therefore it is not possible to supply via the electrical signal electronic units that consume relatively high amounts of energy, or that continuously absorb energy. However, it is provided that the sending unit can have additional measurement sensors integrated therein.

Furthermore, there is the possibility that the measuring device 1 forms part of a measuring system comprising at least one receiving unit (not shown in the figures), which can be fed, generally continuously, by using any possible means of electric supply known to those skilled in the art, such as batteries or an electrical connection to an electric power source. This receiving unit is generally spaced from the measuring device 1. The receiving unit is configured to receive the wireless signal sent by the sending unit 22. Further details on a measuring system comprising at least one measuring device 1 and a receiving unit will be given later in the description.

The acquisition unit 2 preferably comprises a rigid housing 23 so that the transducer 21 and the sending unit 22 are housed in the housing 23, which defines a seat designated for their positioning, the seat being hermetically sealed with respect to the outside. The housing 23 therefore protects the transducer 21 and the sending unit 22 and ensures the compactness of the acquisition unit 2. The housing 23 can further comprise fastening elements 23a configured to fasten the housing 23 to a wall, for example a wall of a machine. The fastening elements 23a can for example comprise slots housing the stems of respective screws.

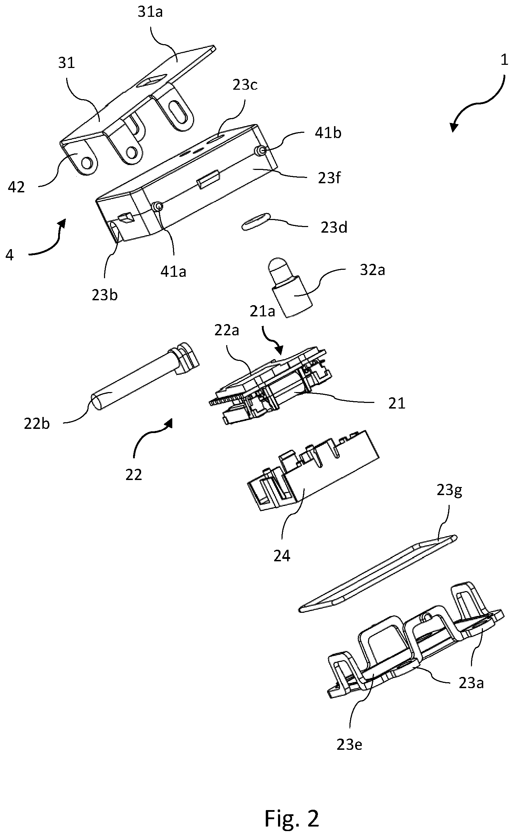

As shown in Figure 2, the housing 23 is formed by two rigid parts 23e, 23f adapted to be coupled to each other. A gasket 23g is arranged between the two parts 23e, 23f of the housing 23 to seal the housing 23. The acquisition unit 2 can also provide a further rigid support 24 arranged in the housing 23. The transducer 21 and the electronic processing unit 22a are fastened to the rigid support 24.

In one embodiment, the housing 23 comprises a first opening 23b and the antenna 22b of the sending unit 22 extends through the first opening 23b. The first opening is preferably sealed by a gasket arranged around the antenna 22b. Alternatively, the antenna 22b can be completely contained in the housing 23 without needing dedicated openings, as in the case of the antennas of the "mushroom" type.

The device 1 comprises a mechanical interface 3 associated with the acquisition unit 2 and active on the measuring portion 21a of the transducer 21. In particular, the mechanical interface 3 is attached to the acquisition unit 2 at the housing 23. For this purpose, the device 1 comprises a connection system 4, which will be described more in detail below.

The mechanical interface 3 has a detection portion 31a and is switchable from an inactive configuration to an active configuration by applying a mechanical action on the detection portion 31a. The mechanical action is generally represented by a force applied to the detection portion 31a, which causes a movement of at least a part of the mechanical interface 3, as described more in detail below. The mechanical interface 3 is also configured to remain in the inactive configuration when no mechanical action is applied on the detection portion 31a.

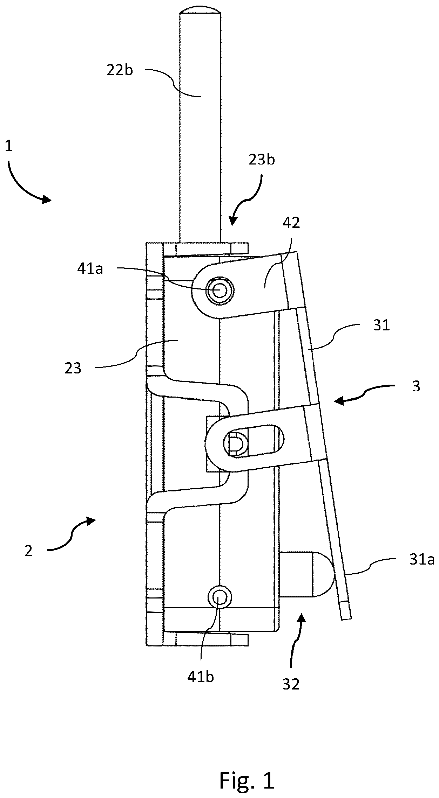

In the preferred embodiment, the mechanical interface 3 comprises an application member 31, which is external with respect to the housing 23 of the acquisition unit 2. In the embodiments of Figures 1 to 6, the application member 31 is defined by a plate. The detection portion 31a is associated with the application member 31, and for example can be represented by a surface of the application member 31.

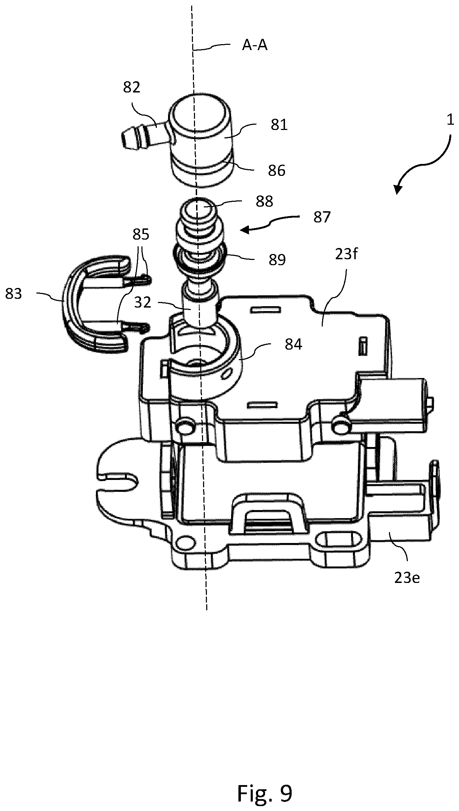

The application member 31 is attached to the acquisition unit 2 and is movable with respect to the acquisition unit 2. As shown in Figures 1-6, the application member 31 can be hinged to the acquisition unit 2, and in particular to the housing 23. An alternative application member is instead shown in Figure 9, as described more in detail below.

In the inactive configuration, the application member 31 is in a first position with respect to the acquisition unit 2, and in the active configuration the application member 31 is in a second position with respect to the acquisition unit 2. In detail, in the first position the detection portion 31a is in a position spaced with respect to the acquisition unit 2, while in the second position the detection portion 31a is in a position close to the acquisition unit 2. The application member 31 in detail is movable with respect to the acquisition unit 2 upon the application of the mechanical action on the detection portion 31a.

The mechanical interface 3 is configured to apply a force, in the active configuration, to the measuring portion 21a of the transducer 21. In the inactive configuration, instead, the mechanical interface does not substantially apply any force to the measuring portion 21a, or if a force of this kind is present, it is lower than the minimum force threshold detectable by the transducer 21. The active and inactive configuration can therefore be distinguished based on the force applied by the mechanical interface on the measuring portion 21a, which is higher in the active configuration and lower or zero in the inactive configuration.

In particular, the mechanical interface 3 comprises a transmission member 32 associated with the measuring portion 21a of the transducer 21. In the preferred embodiment, the transmission member 32 comprises a first cylinder-piston system 32a arranged between the application member 31 and the measuring portion 21a of the transducer 21.

The housing 23 of the acquisition unit has a second opening 23c and the transmission member 32 extends through the second opening 23c. The second opening is preferably sealed by a gasket, formed as an O-ring 23d, arranged around the transmission member 32.

In detail, the first cylinder-piston system 32a is configured to perform a compression stroke upon the passage of the application member 31 from the first position to the second position. More in detail, the first cylinder-piston system 32a comprises a stationary part, such as a cylinder, fastened to the acquisition unit 2 at the sensitive portion 21a of the transducer 21, and a movable part, like a first piston, slidingly associated with the stationary part.

Compression stroke means the movement by which the moving part moves in an insertion direction in the stationary part. The motion of the moving part in an extraction direction opposite the insertion direction in the stationary part corresponds instead to an expansion stroke.

The transmission member 32 is therefore configured to transmit to the measuring portion 21a of the transducer 21 a force applied to the detection portion 31a of the application member 31, in the active configuration. Moreover, the transmission member 32 is configured, in particular during the compression stroke, to counteract the passage of the application member 31 from the first position to the second position, as well as to maintain the application member 31 in the first position in the absence of a mechanical action acting on the detection portion 31a.

A resilient member and/or a pressurized fluid can be arranged between the stationary part and the movable part of the first cylinder-piston system 32a. With the movement of the application member 31 from the first to the second position, the elastic member and/or the pressurized fluid are compressed and develop a force acting on the movable part of the first cylinder-piston system 32a, thus counteracting the movement of the application member, and also acting on the measuring portion 21a of the transducer 21, activating the transducer 21. When each force acting on the detection portion 31a ceases, the elastic member and/or the pressurized fluid are no longer compressed and go back to a rest condition bringing the application member 31 from the second position to the first position. In other words, the movable part is pressed in the extraction direction by the elastic member and/or by the pressurized fluid.

The application member 31 acts on the transmission member 32, which in turn is configured to transfer to the measuring portion 21a of the transducer 21 a force applied to the detection portion 31a.

In the embodiments of Figures 1-6, the application member 31 acts on the transmission member 32 as a lever, according to a predetermined leverage ratio between the force applied to the detection portion 31a and the force developed by the transmission member 32 resisting to the passage of the application member 31 from the first to the second position.

In the embodiment of Figure 9, on the other hand, the application member is substantially shaped like a second cylinder-piston system, as further detailed below.

In the case of a lever-shaped application member 31, the device 1 is able to measure a mechanical action, produced for example by an element of a machine, acting directly on the detection portion 31a of the mechanical interface 3. The mechanical interface 3 allows this mechanical action to be adapted to the transducer 21. In particular, it should be noted that the application member 31 can perform even significant movements between the first and second positions when it is subjected to a mechanical action generated by a machine. On the other hand, the force developed by the transmission member 32 on the measuring portion 21a of the transducer 21 is a force whose application point remains substantially stationary, except for the deformation of the transducer, which as explained above can be for example in the order of nanometres in the case of a piezoelectric transducer. To ensure at the same time that the housing 23 is hermetically sealed and continuously centred during the operation of the transmission member 32, an O-ring 23d can be provided, as in the preferred configuration.

In the absence of such a mechanical interface, if for example a machine acts directly on a transducer, this latter, having limited possibilities of deformation, would develop a high force resistant to the movement of the machine, with the risk of blocking the machine or destructing the transducer. Instead, thanks to the mechanical interface 3, the machine meets a lower resistance, substantially given by the resistant force developed by the transmission member 32, and in particular by the elastic member and/or by the pressurized fluid of the first cylinder-piston system 32a, optionally modified according to the leverage ratio.

The appropriate conformation of the mechanical interface 3 is also advantageous with regard to the adaptation of the minimum detectable force threshold, which can be transformed to take different values between the measuring portion 21a of the transducer 21 and the detection portion 31a of the mechanical interface 3. The maximum safety value of force is analogously adapted.

To increase the possibilities of adaptation of the device 1 to mechanical actions of different entities and therefore to different machines, an embodiment provides a measuring device 1, in which a plurality of different leverage ratios are obtainable by repositioning the mechanical interface 3 as described below with reference to the connection system 4 between the application member 31 and the acquisition unit 2. The connection system 4 comprises at least one hinge formed by a connection member 41a, 41b and by an auxiliary member 42. The connection member 41a, 41b is shaped to be rotationally attached to the auxiliary member 42. In the embodiment shown in the figures, each connection member 41 is represented by a pin associated with the acquisition unit 2, and each auxiliary member 42 is represented by a seat associated with the application member 31, for example a support with a circular hole. However, a person skilled in the art can easily invert the positions of the pins and of the seats and/or of the connection members 41 with the auxiliary members 42 between the acquisition unit 2 and the application member 31.

The application member 31 is therefore hinged to the acquisition unit 2 at the connection member 41a, 41b, namely through the hinge formed by the connection member 41 and the auxiliary member 42. The detection portion 31a of the application member 31 is arranged in a distal position of the application member 31 with respect to the auxiliary member 42.

To provide different values of the leverage ratio, the connection system 4 comprises a plurality of connection members 41a, 41b, and in particular first connection members 41a and second connection members 41b spaced from the first connection members 41a. In the embodiment shown in the figures, the first connection members 41a are arranged at a first end portion of the housing 23, whereas the second connection members 41b are arranged at a second end portion of the housing 23 opposite the first end portion. The auxiliary members 42 can be connected alternatively to the first and to the second connection members 41a, 41b.

In particular, the connection system 4 is switchable between a first connection configuration and a second connection configuration. In the first connection configuration, the application member 31 is removably hinged to the acquisition unit 2 at the first connection members 41a, whereas in the second connection configuration the application member 31 is removably hinged to the acquisition unit 2 at the second connection members 41b.

The first and the second configurations are mutually exclusive. In other words, in the first connection configuration, the application member 31 is not hinged to the acquisition unit 2 at the second connection members 41b, and in the second connection configuration the application member 31 is not hinged to the acquisition unit 2 at the first connection members 41a.

For the passage from the first to the second configuration, it is therefore possible to separate the application member 31 from the first connection members 41a and connect the application member 31 to the second connection members 41b.

In the first connection configuration, the application member 31 is configured to act on the transmission member 32 according to a first leverage ratio, whereas in the second connection configuration the application member 31 is configured to act on the transmission member 32 according to a second leverage ratio different from the first leverage ratio. The two different leverage ratios are obtained for example due to the different distance of the transmission member 32 from the first connection members 41a and from the second connection members 41b.

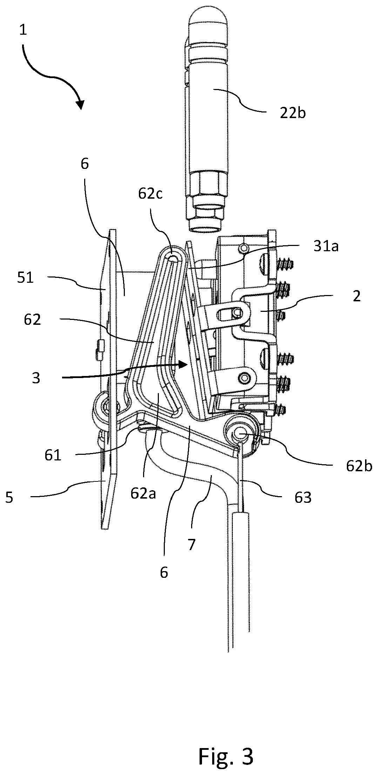

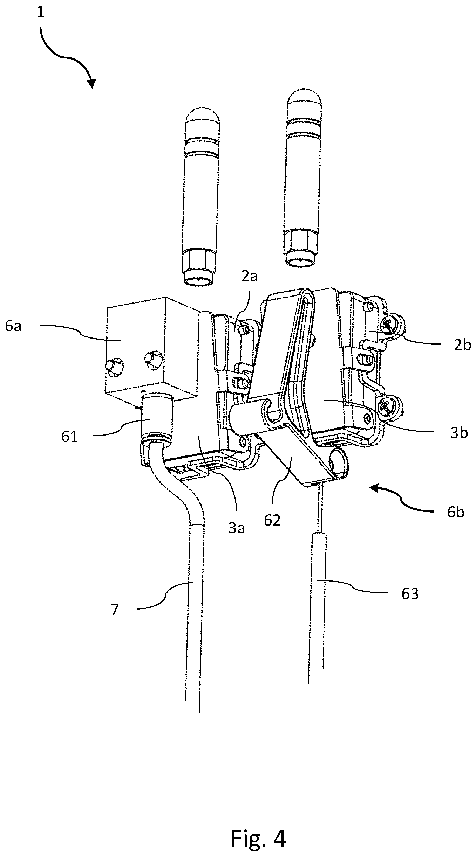

In an embodiment, as shown in Figures 3 and 4, the device 1 comprises a support body 5. The support body 5 preferably comprises a fastening plate 51 and a container (not shown). The acquisition unit 2 is fastened to the support body 5, and preferably the acquisition unit 2 and the mechanical interface 3 are arranged inside the support body 5, in particular inside the container.

In some embodiments, the device 1 comprises at least one conversion member 6. The conversion member 6 can be connected directly or indirectly to the acquisition unit 2 and/or to the mechanical interface 3. For example, in the embodiments of the Figures 3 and 4, the conversion member 6 is connected to the support body 5, and precisely to the fastening plate 51 (in Figure 4, however, the support body is not shown for the sake of a greater visibility of the remaining components).

The conversion member 6 is configured to convert a respective physical quantity to be measured into a mechanical action applied to the detection portion 31a of the mechanical interface 3. The physical quantity to be measured can be, for example, the pressure of a fluid. In another case that will be further shown below, the physical quantity to be measured may be a mechanical action, which is difficult to apply directly to the detection portion 31a of the mechanical interface 3.

According to an example, the at least one conversion member 6 comprises a third cylinder-piston system 61. The third cylinder-piston system 61 is designed to face a fluid duct 7 and is configured to press on the detection portion 31a of the mechanical interface 3 upon the passage of a fluid in the duct 7. In this case, the physical quantity to be measured is given by the pressure or by the flow rate of the fluid in the duct 7. The third cylinder-piston system 61 in detail comprises a stationary part and a movable part. The stationary part is fastened to the support body 5 and faces the detection portion 31a. The movable part is slidably associated with the stationary part and is configured to act on the detection portion 31a upon the passage of a fluid in the duct 7. The appropriate choice of the third cylinder-piston system 61 provides a considerable installation flexibility, thus allowing having again optimum values at the interface 31 and in particular related to the force pressing the detecting portion 31a.

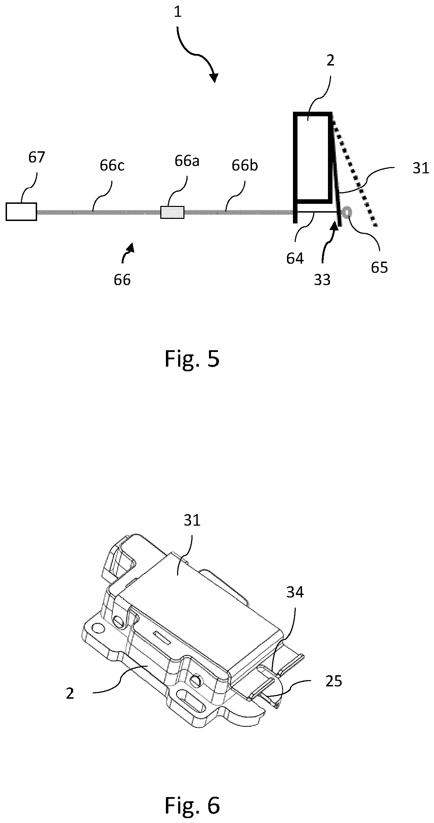

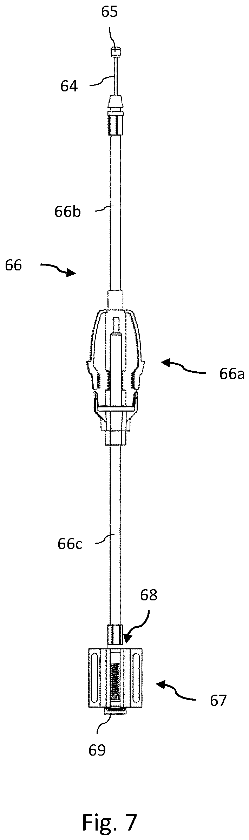

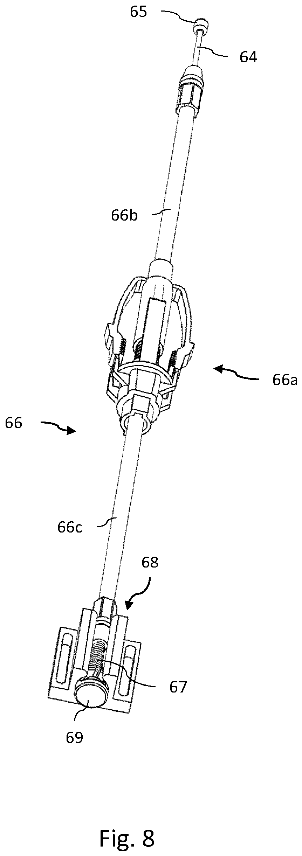

In an alternative embodiment, as shown in Figures 5, 6, 7 and 8, the conversion member 6 comprises a first wire 64. More details of the first wire 64 are visible in Figures 7 and 8, while Figure 5 shows a schematic overview of this embodiment and Figure 6 shows a view from which the first wire 64 has been excluded.

In this embodiment, the application member 31 comprises a gripping element 33, preferably arranged at the detection portion 31a, and the first wire 64 is secured to the gripping element 33 to move the application member 31 between the first and the second positions when subjected to traction or compression. For example, the gripping element 33 can identify a first slot 34, and the first wire 64 can comprise a bead 65 unextractable from the first slot 34, the first wire 64 extending through the first slot 34. The bead 65 is preferably arranged at a first end of the first wire 64.

Still referring to figures 5-8, the conversion member 6 comprises a channel element 66, comprising for example a rigid sheath, secured to the acquisition unit 2. In particular, the channel element 66 is attached at a second slot 25 formed in the acquisition unit 2. The first wire 64 is slidable within the channel element 66, and preferably extends through the second slot 25.

In this embodiment, the conversion member 6 preferably comprises a bias element 67, comprising for example a spring, active between the first wire 64 and the channel element 66 to counteract the sliding of the first wire 64 in the channel element 66 in a first orientation, and to help the sliding of the first wire 64 in the channel element 66 in a second orientation opposite the first orientation. Movements of the first wire 64 in the first and/or second orientation correspond to movements of the application member 31 between the first and second positions. Preferably, the bias element 67 is connected between an abutment portion 68 of the channel element 66 and a second end of the first wire, where a further bead 69 can be provided.

The channel element 66 comprises an adjustment element 66a configured to adjust the length of the channel element 66 between a longer length configuration and a shorter length configuration. Preferably, the adjustment element 66a is arranged between the acquisition unit 2 and the bias element 67.

In detail, in the shown embodiment, the channel element 66 comprises a first segment 66b and a second segment 66c connected to each other at the adjustment element 66a. The adjustment element 66a is therefore configured to lock the first and second segments 66b, 66c together in a plurality of positions to which corresponds a respective plurality of lengths of the channel element 66. The adjustment element 66a can be manufactured as a register, commonly available on the market, or in various other ways known to the persons skilled in the art.

In the shorter length configuration of the channel element 66, the bias element 67 is configured to counteract the movement of the application member 6 from the first to the second position. In fact in this configuration, due to the shortening of the channel element 66, while the first wire 64 maintains its length constant in a condition in which the first wire 64 is secured to the application member 31 whereas the channel element 66 is secured to the acquisition unit 2, the bias element 67 presses the first wire 64 in a sliding direction oriented from the acquisition unit 2 towards the application member 31.

Conversely, in the greater length configuration of the channel element 66, the bias element 67 is configured to counteract the movement of the application member 31 from the second to the first position. In fact, given the lengthening of the channel element 66 while the first wire 64 does not change its length, the bias element 67 presses the first wire 64 in a sliding direction oriented from the application member 31 towards the acquisition unit 2.

Advantageously, by changing between the configurations of greater and shorter length, it can alternatively be obtained that, in the absence of further external stresses on the first wire 64, the mechanical interface 3 is maintained in the active configuration or is maintained in the inactive configuration. Correspondingly, thrust stresses or tensile stresses on the first wire 64 can be detected in an alternative way. According to another embodiment, the at least one conversion member 6 comprises a coupling member 62 attached to the support body 5 and movable relative to the support body 5. The conversion member 6 further comprises a second wire 63 connected to the coupling member 62. The coupling member 62 is configured to bring the mechanical interface 3 into the active configuration upon the application of a mechanical tension to the second wire 63. In this case, the physical quantity to be measured is precisely the mechanical tension of the second wire 63.

For example, the coupling member 62 comprises a cam 62a hinged to the support body 5. The cam 62a has an engaging element 62b adapted to be attached to the second wire 63. In this way, the tension of the second wire 63 can rotate the cam 62a with respect to the support body 5. Furthermore, the cam 62a has a thrust portion 62c configured to develop a force on the detection portion 31a of the mechanical interface 3 when the cam 62a rotates with respect to the support body 5.

In the embodiments just shown, the presence of the conversion member 6 therefore allows measuring physical quantities connected to the operation of a machine without the measuring device 1 being arranged in the position where the physical quantity develops.

This is particularly advantageous when the machine is not strong enough to act directly on the detection portion 31a, in conditions of too severe temperature or when for reasons of size it is not possible to introduce the measuring device 1 into the machine in a position where the machine could act directly on the detection portion 31a.

For example, if the operation of a machine generates a significant flow of air or another fluid, it is possible to measure the presence of pressure or flow rate of the fluid instead of the force associated with a specific movement of the machine. For this purpose, it is sufficient to intercept the flow of fluid of interest by providing a fluid duct 7 that transports the fluid to the device 1 equipped with the correct conversion member 6, in this case the third cylinder-piston system 61.

Alternatively, instead of positioning the measuring device 1 where the detection portion 31a can be directly operated, the second wire 63 can be attached to a part of interest of the machine, with a significantly reduced encumbrance, to then be connected to the coupling member 62 of the device, acting indirectly on the detection portion 31a.

Preferably, the device 1 comprises a plurality of conversion members 6, each conversion member 6 being associated with a different physical quantity. Therefore, the device 1 is designed to measure physical quantities of different nature in a non-invasive manner with the minimum adaptations necessary to direct the physical quantity of interest to the relative conversion member. This entails considerable advantages in terms of flexibility of the device 1.

In this case, as shown in Figure 4, the device 1 can provide a first and a second acquisition unit 2a, 2b and a first and a second mechanical interface 3a, 3b respectively associated with the first acquisition unit 2a and the second acquisition unit 2b. A first conversion member 6a, for example comprising the third cylinder-piston system 61, is configured to act on the first mechanical interface 3a, while a second conversion member 6b, for example comprising the coupling member 62 and the second wire 63, is configured to act on the second mechanical interface 3b.

The first and second acquisition units 2a, 2b are fastened to a single, same support body 5, to which both the first and the second conversion member 6a, 6b are also connected.

Alternatively, a plurality of conversion members 6 can be interchangeably applied to a single acquisition unit 2.

According to another embodiment, shown in Figure 9, the measurement of different physical quantities can be obtained by means of a different conformation of the application member 31 rather than with the addition of conversion members 6. A single measuring device 1 can also be provided with different interchangeable application elements 31.

In particular, in this embodiment the application member 31 can be part of a second cylinder-piston system for detecting the pressure of fluids in a manner similar to what already described for the third cylinder-piston system 61.

More in detail, the device 1 comprises a casing 81 attached to the acquisition unit 2. The casing 81 defines a chamber housing the transmission member 32. The casing 81 further comprises a connection opening 82 configured for the connection with an external fluid duct 7 so as to be able to receive a variable pressure fluid from the external duct 7.

Preferably, the casing 81 is rotatable with respect to the acquisition unit 2 to be connectable to external ducts 7 with different orientations. Specifically, the casing 81 is rotatable about an axis A-A which extends substantially in the direction of the compression stroke of the first cylinder-piston system 32a.

For this purpose, the housing 23 comprises a hook element 83 configured to hold the casing 81 joined to the acquisition unit 2, allowing in any case the aforementioned rotation.

For example, the housing 23 of the acquisition unit 2 can comprise a rib 84 arranged around the transmission member 32, the housing 23 being rotatably associated with the rib 84. The hook element 83 comprises at least one fastening portion for fastening to the rib and at least one protrusion 85 facing the casing. The casing 81 in turn has a circular groove 86 designed to receive the projection 85 of the hook element 83. Thanks to the circular shape of the groove 86, the casing 81 can rotate upon the sliding of the projection 85 in the groove 86, while movements of the projection 85 transverse with respect to the groove 86 are not allowed, such as the separation of the casing 81 from the acquisition unit 2.

The rib 84 is preferably shaped like an arc of circumference, and the hook element 83 comprises a sealing portion shaped like an arc of circumference in a manner complementary to the rib.

The application member 31 comprises a sealing diaphragm 87 arranged inside the chamber of the casing 81. The diaphragm 87 divides the chamber into a first region, in which the transmission member 32 is arranged, and into a second region, in which the connection opening 82 for the external duct 7 is formed. A fluid coming from the connection opening 82 therefore preferably fills only the second region.

The diaphragm 87 is disposed in abutment with the transmission member 32. The detection portion 31a in this embodiment can be identified in the diaphragm 87, which is movable in the chamber from the first to the second position, i.e. toward the acquisition unit 2, upon a pressure increase in the chamber, and in particular in the second portion of the chamber.

In the preferred embodiment, the diaphragm 87 comprises a second piston 88, which identifies the second cylinder-piston system with the casing 81, and an annular gasket 89 between the second piston 88 and the casing 81.

By providing a device 1 with several interchangeable application members 31, changing the operating mode might require to replace not only the application member 31 but also one or more parts 23e, 23f of the housing 23. In particular, it is preferable to use a housing 23 having the rib 84 for using the application member 31 in the version with the second cylinder-piston system, while the lever-shaped version can use a housing 23 where the rib 84 is missing, with the replacement of one or more parts 23e, 23f of the housing 23.

As previously mentioned, the measuring device 1 can be used in a measuring system comprising at least one measuring device 1 and a receiving unit. The measuring system in general can comprise a plurality of measuring devices 1 and/or a plurality of receiving units. The measuring system preferably further comprises an analysis unit connected to the receiving units and configured to store and optionally process the measurement information, as well as any other information contained in the wireless signals sent by the sending units of the measuring devices 1 and received by the receiving units.

Advantageously, depending on the type of processing required, a single receiving unit and a single analysis unit may be enough to manage the signals transmitted by various measuring devices 1. In particular, it is not necessary for each measuring device 1 to be provided with an analysis unit, nor is it necessary for the measuring device 1 to store any measurement information in a memory after sending it through the wireless signal.

In an embodiment in which the measuring system comprises a plurality of receiving units spaced apart from each other, the analysis unit can be configured to process signal information relating to wireless signals, which are sent by a single measuring device 1 and received by distinct receiving units. This processing is carried out so as to determine a position of the measuring device 1 with respect to the receiving units. This can occur following different triangulation algorithms known to the person skilled in the art. In particular, the signal information to be used for the triangulation can comprise a wireless signal amplitude and/or a wireless signal reception time. When the measuring device is fastened to a machine, this allows monitoring the position of the machine, with a considerable advantage in terms of safety.

## Claims

1. Force measuring device (1), comprising:
- an acquisition unit (2), comprising:
- a transducer (21) having a measuring portion (21a), the transducer (21) being configured to harvest energy associated with a force applied to the measuring portion (21a) and to convert said energy into an electrical signal suitable to electrically supply the acquisition unit (2), and
- a sending unit (22) connected to the transducer (21), the sending unit (22) being configured to receive and process said electrical signal and to transmit a wireless signal containing a measurement information representative of a force applied to the measuring portion (21a) of the transducer (21),
- a rigid housing (23), the transducer (21) and the sending unit (22) being housed in the housing (23), the housing (23) having an opening (23c),
- wherein the acquisition unit (2) is configured to be electrically powered exclusively through the conversion of said energy into said electrical signal by the transducer (21),
- a mechanical interface (3) comprising:
- an application member (31), which is defined by a plate, is external with respect to the housing (23), is hinged to the housing (23), and is movable with respect to the acquisition unit (2), the application member (31) having a detection portion (31a) represented by a surface of the application member (31),
- the mechanical interface (3) is switchable, upon the application of a force on the detection portion (31a), from an inactive configuration, in which the application member (31) is in a first position where the detecting portion (31a) is spaced from the acquisition unit (2), to an active configuration, in which the application member (31) is in a second position where the detecting portion (31a) is close to the acquisition unit (2),
- a transmission member (32) extending through said opening (23c) of the housing (23), the application member (31) being configured to transfer to the transmission member (32) a force applied to the detection portion (31a) acting as a lever,
- the transmission member (32) comprises a first cylinder-piston system (32a) arranged between the application member (31) and the measuring portion (21a) of the transducer (21), the first cylinder-piston system (32a) being configured to perform a compression stroke during the passage of the application member (31) from the first position to the second position,
- the first cylinder-piston system (32a) being configured, during the compression stroke, to counteract the passage of the application member (31) from the first position to the second position,
- the first cylinder-piston system (32a) being configured to transmit to the measuring portion (21a) of the transducer (21) a force applied to the detection portion (31a) of the application member (31) in the active configuration.

2. The device (1) according to claim 1, comprising a connection system (4) comprising first and second connection members (41a, 41b), the connection system (4) being switchable between a first connection configuration, in which the application member (3) is removably hinged to the acquisition unit (2) at the first connection members (41a) and is configured to act on the transmission member (32) according to a first leverage ratio, and a second connection configuration, in which the application member (31) is removably hinged to the acquisition unit (2) at the second connection members (41b) and is configured to act on the transmission member (32) according to a second leverage ratio different from the first leverage ratio, the first and second configurations being mutually exclusive.

3. The device (1) according to claim 1 or 2, comprising at least one conversion member (6) configured to convert a force and/or pressure to be measured into a mechanical action applied to the detection portion (31a) of the mechanical interface (3).

4. The device (1) according to claim 3, wherein the application member (31) comprises a gripping element (33), and the conversion member (6) comprises a first wire (64) secured to the gripping element (33) to move the application member (31) between the first and second positions when subjected to traction or compression.

5. The device (1) according to claim 4, wherein the conversion member (6) comprises a channel element (66) secured to the acquisition unit (2), the first wire (64) being slidable within the channel element (66).

6. The device (1) according to claim 5, wherein the conversion member (6) comprises a bias element (67) configured to act between the first wire (64) and the channel element (66) to counteract the sliding of the first wire (64) in the channel element (66) in a first orientation and to help the sliding of the first wire (64) in the channel element (66) in a second orientation opposite the first orientation.

7. The device (1) according to claim 6, wherein the channel element (66) comprises an adjustment element (66a) configured to adjust the length of the channel element (66) between a greater length configuration and a shorter length configuration, in the shorter length configuration of the channel element (66) the bias element (67) being configured to counteract the movement of the application member (31) from the first to the second position, in the greater length configuration of the channel element (66) the bias element (67) being configured to counteract the movement of the application member (31) from the second to the first position.

8. The device (1) according to claim 3, comprising a support body (5), the acquisition unit (2) being fastened to the support body (5), wherein the at least one conversion member (6) includes:
- a coupling member (62) attached to the support body (5) and movable with respect to the support body (5), and
- a second wire (63) connected to the coupling member (62),
the coupling member (62) being configured to bring the mechanical interface (3) in the active configuration upon the application of a mechanical tension to the second wire (63).

9. The device (1) according to claim 8, wherein the coupling member (62) comprises a cam (62a) rotationally attached to the support body (5), the cam (62a) having an engaging element (62b) adapted to be attached to the second wire (63) and a thrust portion (62c) configured to develop a force on the detection portion (31a) of the mechanical interface (3) when the cam (62a) rotates with respect to the support body (5).

10. Kit comprising:
- a device (1) according to any one of the claims from 1 to 9, wherein the application member (31) is removable from the acquisition unit (2),
- a casing (81), adapted to be connected to the acquisition unit (2) of the device (1) when said application member (31) is removed from the acquisition unit (2), the casing (81) defining a chamber housing the transmission member (32), the casing (81) comprising a connection opening (82) configured for connecting with an external fluid duct (7) and for receiving a variable pressure fluid from the external duct (7),
- a further application member comprising a sealing diaphragm (87) abutting the transmission member (32) and having a respective detection portion (31a) associated with the diaphragm (87), the diaphragm (87) being movable in said chamber, upon a pressure increase in said chamber, from a respective first position, in which the respective detection portion (31a) is spaced with respect to the acquisition unit (2), to a respective second position, in which the respective detection portion (31a) is close to the acquisition unit (2).

## Patentansprüche

1. Kraftmessvorrichtung (1), bestehend aus:
- einer Erfassungseinheit (2), umfassend:
- einen Wandler (21) mit einem Messabschnitt (21a), wobei der Wandler (21) so konfiguriert ist, dass er Energie aufnimmt, die mit einer auf den Messabschnitt (21a) ausgeübten Kraft verbunden ist, und diese Energie in ein elektrisches Signal umwandelt, das zur elektrischen Versorgung der Erfassungseinheit (2) geeignet ist, und
- eine Sendeeinheit (22), die mit dem Wandler (21) verbunden ist, wobei die Sendeeinheit (22) so konfiguriert ist, dass sie das elektrische Signal empfängt und verarbeitet und ein Funksignal sendet, das eine Messinformation enthält, die eine auf den Messabschnitt (21a) des Wandlers (21) ausgeübte Kraft darstellt,
- ein starres Gehäuse (23), wobei der Wandler (21) und die Sendeeinheit (22) in dem Gehäuse (23) untergebracht sind und das Gehäuse (23) eine Öffnung (23c) aufweist,
- wobei die Erfassungseinheit (2) so konfiguriert ist, dass sie ausschließlich durch die Umwandlung der Energie in das elektrische Signal durch den Messwandler (21) elektrisch betrieben wird,
- eine mechanische Schnittstelle (3), bestehend aus:
- einem Applikationselement (31), das durch eine Platte definiert ist, sich in Bezug auf das Gehäuse (23) außen befindet, mit dem Gehäuse (23) eine Gelenkverbindung hat und in Bezug auf die Erfassungseinheit (2) beweglich ist, wobei das Applikationselement (31) einen Erfassungsabschnitt (31a) aufweist, der durch eine Oberfläche des Applikationselements (31) dargestellt wird,
- wobei die mechanischen Schnittstelle (3) bei Aufbringen einer Kraft auf den Erfassungsabschnitt (31a) von einer inaktiven Konfiguration, in der sich das Applikationselement (31) in einer ersten Position befindet, in der der Erfassungsabschnitt (31a) von der Erfassungseinheit (2) beabstandet ist, in eine aktive Konfiguration umschaltbar ist, in der sich das Applikationselement (31) in einer zweiten Position befindet, in der sich der Erfassungsabschnitt (31a) nahe an der Erfassungseinheit (2) befindet,
- einem Übertragungselement (32), das sich durch die Öffnung (23c) des Gehäuses (23) erstreckt, wobei das Applikationselement (31) so konfiguriert ist, dass es eine auf den als Hebel wirkenden Erfassungsabschnitt (31a) ausgeübte Kraft auf das Übertragungselement (32) überträgt,
- wobei das Übertragungselement (32) ein erstes Zylinder-Kolben-System (32a) umfasst, das zwischen dem Applikationselement (31) und dem Messabschnitt (21a) des Wandlers (21) angeordnet ist, wobei das erste Zylinder-Kolben-System (32a) so konfiguriert ist, dass es einen Kompressionshub während des Übergangs des Applikationselements (31) von der ersten Position zur zweiten Position ausführt,
- wobei das erste Zylinder-Kolben-System (32a) so konfiguriert ist, dass es während des Kompressionshubs dem Übergang des Applikationselements (31) von der ersten Position in die zweite Position entgegenwirkt,
- wobei das erste Zylinder-Kolben-System (32a) so konfiguriert ist, dass es auf den Messabschnitt (21a) des Wandlers (21) eine Kraft überträgt, die in der aktiven Konfiguration auf den Erfassungsabschnitt (31a) des Applikationselements (31) ausgeübt wird.

2. Vorrichtung (1) nach Anspruch 1, umfassend ein Verbindungssystem (4), das erste und zweite Verbindungselemente (41a, 41b) umfasst, wobei das Verbindungssystem (4) zwischen einer ersten Verbindungskonfiguration, in der das Applikationselement (3) an den ersten Verbindungselementen (41a) abnehmbar mit der Erfassungseinheit (2) eine Gelenkverbindung hat und so konfiguriert ist, dass es gemäß einem ersten Hebelverhältnis auf das Übertragungselement (32) wirkt und eine zweite Verbindungskonfiguration, in der das Applikationselement (31) an der Erfassungseinheit (2) an den zweiten Verbindungselementen (41b) abnehmbar eine Gelenkverbindung hat und so konfiguriert ist, dass es auf das Übertragungselement (32) gemäß einem zweiten Hebelverhältnis wirkt, das sich von dem ersten Hebelverhältnis unterscheidet, wobei die erste und die zweite Konfiguration einander gegenseitig ausschließen.

3. Vorrichtung (1) nach Anspruch 1 oder 2, die mindestens ein Umwandlungselement (6) umfasst, das so konfiguriert ist, dass es eine zu messende Kraft und/oder einen zu messenden Druck in eine mechanische Wirkung umwandelt, die auf den Erfassungsabschnitt (31a) der mechanischen Schnittstelle (3) ausgeübt wird.

4. Vorrichtung (1) nach Anspruch 3, wobei das Applikationselement (31) ein Greifelement (33) umfasst und das Umwandlungselement (6) einen ersten Draht (64) umfasst, der an dem Greifelement (33) befestigt ist, um das Applikationselement (31) zwischen der ersten und der zweiten Position zu bewegen, wenn es einer Zug- oder Druckkraft ausgesetzt ist.

5. Vorrichtung (1) nach Anspruch 4, wobei das Umwandlungselement (6) ein Kanalelement (66) umfasst, das an der Erfassungseinheit (2) befestigt ist, wobei der erste Draht (64) in dem Kanalelement (66) verschiebbar ist.

6. Vorrichtung (1) nach Anspruch 5, wobei das Umwandlungselement (6) ein Vorspannelement (67) umfasst, das so konfiguriert ist, dass es zwischen dem ersten Draht (64) und dem Kanalelement (66) wirkt, um dem Gleiten des ersten Drahts (64) in dem Kanalelement (66) in einer ersten Ausrichtung entgegenzuwirken und das Gleiten des ersten Drahts (64) in dem Kanalelement (66) in einer zweiten Ausrichtung entgegengesetzt zur ersten Ausrichtung zu unterstützen.

7. Vorrichtung (1) nach Anspruch 6, wobei das Kanalelement (66) ein Einstellelement (66a) umfasst, das so konfiguriert ist, dass es die Länge des Kanalelements (66) zwischen einer Konfiguration mit größerer Länge und einer Konfiguration mit kürzerer Länge einstellt, wobei das Vorspannelement (67) in der Konfiguration mit kürzerer Länge des Kanalelements (66) so konfiguriert ist, dass es der Bewegung des Applikationselements (31) von der ersten in die zweite Position entgegenwirkt, wobei das Vorspannelement (67) in der Konfiguration mit größerer Länge des Kanalelements (66) so konfiguriert ist, dass es der Bewegung des Applikationselements (31) von der zweiten in die erste Position entgegenwirkt.

8. Vorrichtung (1) nach Anspruch 3, umfassend einen Stützkörper (5), wobei die Erfassungseinheit (2) am Stützkörper (5) befestigt ist, wobei das mindestens eine Umwandlungselement (6) umfasst:
- ein Kupplungselement (62), das an dem Stützkörper (5) befestigt und in Bezug auf den Stützkörper (5) beweglich ist, und
- einen zweiten Draht (63), das mit dem Kupplungselement (62) verbunden ist, wobei das Kupplungselement (62) so konfiguriert ist, dass es die mechanische Schnittstelle (3) in die aktive Konfiguration bringt, wenn eine mechanische Spannung auf den zweiten Draht (63) ausgeübt wird.

9. Vorrichtung (1) nach Anspruch 8, wobei das Kupplungselement (62) eine Nocke (62a) umfasst, die drehbar am Stützkörper (5) angebracht ist, wobei die Nocke (62a) ein Eingriffselement (62b), das so angepasst ist, dass es am zweiten Draht (63) angebracht werden kann, und einen Druckabschnitt (62c) aufweist, der so konfiguriert ist, dass er eine Kraft auf den Erfassungsabschnitt (31a) der mechanischen Schnittstelle (3) entwickelt, wenn sich die Nocke (62a) in Bezug auf den Stützkörper (5) dreht.

10. Bausatz bestehend aus:
- einer Vorrichtung (1) nach einem der Ansprüche 1 bis 9, wobei das Applikationselement (31) von der Erfassungseinheit (2) abnehmbar ist,
- einem Gehäuse (81), das mit der Erfassungseinheit (2) der Vorrichtung (1) verbunden werden kann, wenn das Applikationselement (31) von der Erfassungseinheit (2) entfernt ist, wobei das Gehäuse (81) eine Kammer definiert, die das Übertragungselement (32) aufnimmt, wobei das Gehäuse (81) eine Verbindungsöffnung (82) umfasst, die so konfiguriert ist, dass sie mit einer externen Fluidleitung (7) verbunden werden kann und ein Fluid mit variablem Druck von der externen Leitung (7) aufnehmen kann,
- einem weiteren Applikationselement, das eine Dichtungsmembran (87) umfasst, die an das Übertragungselement (32) anstößt und einen jeweiligen Erfassungsabschnitt (31a) aufweist, der der Membran (87) zugeordnet ist, wobei die Membran (87) in der Kammer bei einem Druckanstieg in der Kammer von einer jeweiligen ersten Position, in der der jeweilige Erfassungsabschnitt (31a) in Bezug auf die Erfassungseinheit (2) beabstandet ist, in eine jeweilige zweite Position bewegt werden kann, in der der jeweilige Erfassungsabschnitt (31a) nahe an der Erfassungseinheit (2) ist.

## Revendications

1. Dispositif de mesure de force (1), comprenant :
- une unité d'acquisition (2), comprenant :
- un transducteur (21) ayant une portion de mesure (21a), le transducteur (21) étant configuré pour récolter l'énergie associée à une force appliquée à la portion de mesure (21a) et pour convertir ladite énergie en un signal électrique approprié pour alimenter électriquement l'unité d'acquisition (2), et
- une unité d'envoi (22) connectée au transducteur (21), l'unité d'envoi (22) étant configurée pour recevoir et traiter ledit signal électrique et pour transmettre un signal sans fil contenant une information de mesure représentative d'une force appliquée à la portion de mesure (21a) du transducteur (21),
- un boîtier rigide (23), le transducteur (21) et l'unité d'envoi (22) étant logés dans le boîtier (23), le boîtier (23) ayant une ouverture (23c),
- dans lequel l'unité d'acquisition (2) est configurée pour être alimentée électriquement exclusivement à travers la conversion de ladite énergie en ledit signal électrique par le transducteur (21),
- une interface mécanique (3) comprenant :
- un organe d'application (31), qui est défini par une plaque, est externe par rapport au boîtier (23), est articulé au boîtier (23), et est mobile par rapport à l'unité d'acquisition (2), l'organe d'application (31) ayant une portion de détection (31a) représentée par une surface de l'organe d'application (31),
- l'interface mécanique (3) est commutable, lors de l'application d'une force sur la portion de détection (3 la), d'une configuration inactive, dans laquelle l'organe d'application (31) est dans une première position où la portion de détection (31a) est espacée de l'unité d'acquisition (2), à une configuration active, dans laquelle l'organe d'application (31) est dans une seconde position où la portion de détection (31a) est proche de l'unité d'acquisition (2),
- un organe de transmission (32) s'étendant à travers ladite ouverture (23c) du boîtier (23), l'organe d'application (31) étant configuré pour transférer à l'organe de transmission (32) une force appliquée à la portion de détection (31a) agissant comme un levier,
- l'organe de transmission (32) comprend un premier système cylindre-piston (32a) disposé entre l'organe d'application (31) et la portion de mesure (21a) du transducteur (21), le premier système cylindre-piston (32a) étant configuré pour effectuer une course de compression pendant le passage de l'organe d'application (31) de la première position à la seconde position,
- le premier système cylindre-piston (32a) étant configuré, pendant la course de compression, pour contrer le passage de l'organe d'application (31) de la première position à la seconde position,
- le premier système cylindre-piston (32a) étant configuré pour transmettre à la portion de mesure (21a) du transducteur (21) une force appliquée à la portion de détection (31a) de l'organe d'application (31) dans la configuration active.

2. Dispositif (1) selon la revendication 1, comprenant un système de connexion (4) comprenant des premiers et seconds organes de connexion (41a, 41b), le système de connexion (4) étant commutable entre une première configuration de connexion, dans laquelle l'organe d'application (3) est articulé de manière amovible à l'unité d'acquisition (2) au niveau des premiers organes de connexion (41a) et est configuré pour agir sur l'organe de transmission (32) selon un premier rapport de levier, et une seconde configuration de connexion, dans laquelle l'organe d'application (31) est articulé de manière amovible à l'unité d'acquisition (2) au niveau des seconds organes de connexion (41b) et est configuré pour agir sur l'organe de transmission (32) selon un second rapport de levier différent du premier rapport de levier, les première et seconde configurations étant mutuellement exclusives.

3. Dispositif (1) selon la revendication 1 ou 2, comprenant au moins un organe de conversion (6) configuré pour convertir une force et/ou une pression à mesurer en une action mécanique appliquée à la portion de détection (31a) de l'interface mécanique (3).

4. Dispositif (1) selon la revendication 3, dans lequel l'organe d'application (31) comprend un élément de préhension (33), et l'organe de conversion (6) comprend un premier fil (64) fixé à l'élément de préhension (33) pour déplacer l'organe d'application (31) entre les première et deuxième positions lorsqu'il est soumis à une traction ou une compression.

5. Dispositif (1) selon la revendication 4, dans lequel l'organe de conversion (6) comprend un élément de canal (66) fixé à l'unité d'acquisition (2), le premier fil (64) pouvant coulisser à l'intérieur de l'élément de canal (66).

6. Dispositif (1) selon la revendication 5, dans lequel l'organe de conversion (6) comprend un élément de sollicitation (67) configuré pour agir entre le premier fil (64) et l'élément de canal (66) pour contrer le coulissement du premier fil (64) dans l'élément de canal (66) dans une première orientation et pour aider le coulissement du premier fil (64) dans l'élément de canal (66) dans une deuxième orientation opposée à la première orientation.

7. Dispositif (1) selon la revendication 6, dans lequel l'élément de canal (66) comprend un élément d'ajustement (66a) configuré pour ajuster la longueur de l'élément de canal (66) entre une configuration de longueur supérieure et une configuration de longueur inférieure, dans la configuration de longueur inférieure de l'élément de canal (66), l'élément de sollicitation (67) étant configuré pour contrer le mouvement de l'organe d'application (31) de la première à la deuxième position, dans la configuration de longueur supérieure de l'élément de canal (66), l'élément de sollicitation (67) étant configuré pour contrer le mouvement de l'organe d'application (31) de la deuxième à la première position.

8. Dispositif (1) selon la revendication 3, comprenant un corps de support (5), l'unité d'acquisition (2) étant attachée au corps de support (5), dans lequel l'au moins un organe de conversion (6) comprend :
- un organe d'accouplement (62) fixé au corps de support (5) et mobile par rapport au corps de support (5), et
- un second fil (63) connecté à l'organe d'accouplement (62),
l'organe d'accouplement (62) étant configuré pour amener l'interface mécanique (3) dans la configuration active lors de l'application d'une tension mécanique au second fil (63).

9. Dispositif (1) selon la revendication 8, dans lequel l'organe d'accouplement (62) comprend une came (62a) fixée de manière rotative au corps de support (5), la came (62a) ayant un élément d'engagement (62b) apte à être fixé au second fil (63) et une portion de poussée (62c) configurée pour développer une force sur la portion de détection (31a) de l'interface mécanique (3) lorsque la came (62a) tourne par rapport au corps de support (5).

10. Kit comprenant :
- un dispositif (1) selon l'une quelconque des revendications de 1 à 9, dans lequel l'organe d'application (31) est amovible par rapport à l'unité d'acquisition (2),
- un boîtier (81), apte à être connecté à l'unité d'acquisition (2) du dispositif (1) lorsque ledit organe d'application (31) est retiré de l'unité d'acquisition (2), le boîtier (81) définissant une chambre logeant l'organe de transmission (32), le boîtier (81) comprenant une ouverture de connexion (82) configurée pour être connectée à un conduit de fluide externe (7) et pour recevoir un fluide à pression variable provenant du conduit externe (7),
- un autre organe d'application comprenant un diaphragme d'étanchéité (87) en butée contre l'organe de transmission (32) et ayant une portion de détection (31a) respective associée au diaphragme (87), le diaphragme (87) étant mobile dans ladite chambre, lors d'une augmentation de pression dans ladite chambre, d'une première position respective, dans laquelle la portion de détection (31a) respective est espacée par rapport à l'unité d'acquisition (2), à une seconde position respective, dans laquelle la portion de détection (31a) respective est proche de l'unité d'acquisition (2).
